# EUROPEAN PATENT APPLICATION

(11) **EP 2 216 524 A1**
(43) Date of publication of application: **11.08.2010**
(21) Application number: 10152451.0
(22) Date of filing: 02.02.2010
(51) Int. Cl.: F01N 3/20

(54) **Heated Urea Strainer for Diesel Engine**

(30) Priority: 10.02.2009 US 368657
(71) Applicant: Delphi Technologies, Inc., Troy, MI 48007 (US)
(72) Inventor: De la Cruz, José, 32543, Cd. Juarez (MX); Hines, Keith H., El Paso, TX 79932 (US); Aikman, Steven W., El Paso, TX 79912 (US); McHale, Michael J., El Paso, TX 79912 (US)
(74) Representative: Denton, Michael John

(57) **Abstract**

A urea strainer (24) includes a mesh (50) for removing impurities from urea passing therethrough and heatable wires (52) to heat the urea as it passes through the mesh (50). The urea is provided to an emission control system of a diesel engine.

## Description

### TECHNICAL FIELD

The present invention relates generally to simultaneously heating engine fluids and filtering the fluids, and more particularly to heated urea strainers for diesel engines.

### BACKGROUND OF THE INVENTION

Diesel engines are typically required by law to incorporate a method for reducing nitrous-oxide (NOx) emissions. To reduce the amount of NOx emitted, many diesel engines include what is known as Selective Catalytic Reduction (SCR) system. In an SCR system, a solution of urea and water is injected into a catalytic converter, which is part of the emission control system of a diesel engine. When the urea-water solution interacts with the NOx, the NOx is converted into nitrogen gas (N2) and water (H2O).

The SCR system therefore requires a urea delivery system whereby the urea may be transferred from a urea tank to the catalytic converter when necessary. However, urea freezes at -11°C. In many parts of the world in which diesel engines are used, typical winter temperatures can dip below -25 °C. Thus, a method for melting urea so that it may be injected into a catalytic converter while in extreme weather conditions is necessary. Currently, the predominant method for melting urea in an SCR system involves a coil heating element.

### SUMMARY OF THE INVENTION

As recognized herein, it is unfortunately the case that the above-mentioned coil heating element requires a high current draw from the diesel engine system, consuming energy that would be used elsewhere in the diesel engine system. Further, the present application recognizes that existing coils to melt urea are placed in a less than optimal position in terms of efficiency. As understood herein, a heating element should be positioned as close as possible to a urea strainer.

Accordingly, a system includes a urea tank and a strainer through which urea from the tank passes to an emission control system of a diesel engine. At least portions of the strainer can be heated to heat urea passing through the strainer.

The portions may include wires that may criss-cross each other. The strainer may be disc-shaped, and the strainer removes impurities from urea passing therethrough. Thus, the wires may be juxtaposed with material in a mesh to remove impurities from urea. An electrical connector can be provided that is configured for engaging a source of electricity. The connector is electrically connected to the wires.

In another aspect, an apparatus includes a strainer engageable with a urea tank associated with a diesel engine for chemically reacting with nitrogen oxide. The strainer includes plural elements removing impurities from urea passing therethrough, with at least some elements being heatable by electricity to heat urea. An electrical connector is configured for engaging a source of electricity. The connector is electrically connected to at least some of the elements.

In another aspect, a method includes removing impurities from urea and heating the urea as the impurities are being removed therefrom.

The details of the present invention, both as to its structure and operation, can best be understood in reference to the accompanying drawings, in which like reference numerals refer to like parts, and in which:

### BRIEF DESCRIPTION OF THE DRAWINGS

Figure 1 is a block diagram in accordance with one non-limiting embodiment of a diesel engine system;

Figure 2 is a perspective view of a non-limiting embodiment of a urea strainer capable of being heated to melt frozen urea; and

Figure 3 is a top plan view of the urea strainer shown in Figure 2, with portions of the housing removed to expose the interior strainer mesh.

### DESCRIPTION OF THE PREFERRED EMBODIMENT

The present invention is intended for application in automotive vehicle systems and will be described in that context. It is to be understood, however, that the present invention could also be applied in other fuel delivery applications.

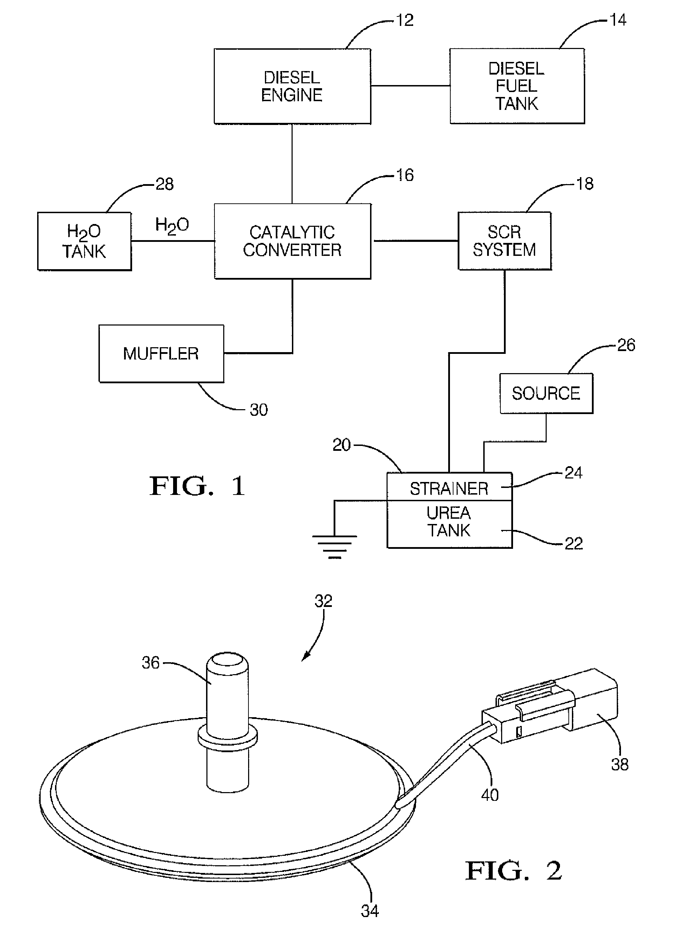

Beginning initially with Figure 1, a diesel engine system 10 is shown. The system 10 has a diesel engine 12 and a diesel fuel tank 14 which delivers diesel fuel to the engine 12 when necessary. Further, connected to the diesel engine 12 is a catalytic converter 16, with the catalytic converter 16 receiving emissions produced by the diesel engine 12.

Attached to the catalytic converter 16 is a Selective Catalytic Reduction (SCR) system 18. The purpose of the SCR system 18 is to reduce nitrous oxide (NOx) emissions created by the diesel engine 12 into nitrogen gas (N2) and water (H20). The SCR system 18 accomplishes this by injecting urea into NOx produced by the catalytic converter 16. When the urea interacts with the NOx, the NOx is converted into N2 and H2O.

Thus, the SCR system 18 requires a urea delivery system 20. The urea delivery system 20 includes a urea tank 22 where urea may be stored, and a urea strainer 24 which, in accordance with principles explained further below, is made up of an electrically resistive mesh composition capable of both filtering and melting urea. Further, the strainer 24 has an energy source 26 which provides energy required by the strainer 24 to melt urea in the tank 22. The energy source 26 may be the electrical distribution system of a vehicle and may include a battery.

Further still, the catalytic converter 16 can be fluidly connected to a water tank 28. The water tank 28 may receive H2O from the catalytic converter 16. Lastly, a muffler 30 is connected to the catalytic converter 16. Remaining emissions from the treated effluent of the catalytic converter 16, e.g., N2, may travel to the muffler 30, where the muffler 30 may then release the remaining emissions from the diesel engine system 10.

Moving to Figure 2, a non-limiting embodiment of a urea strainer is shown embodied in a urea strainer assembly 32. The assembly 32 may be placed in a urea tank. The assembly 32 can include a hollow metal or plastic strainer housing 34 and an outlet 36 formed on the housing 34 through which urea may pass from a urea tank, with fluid passing from the tank, into an inlet (not shown) on the side of the strainer opposite the outlet 36, and then to the SCR system 18 described above.

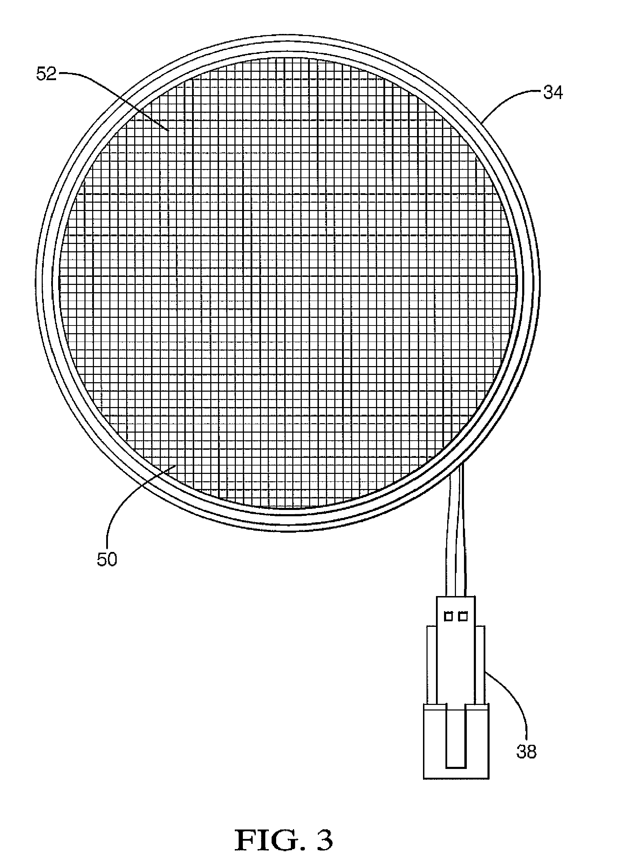

As set forth further below, the strainer in the housing 34 is at least partially composed of overlapping wires capable of being heated and cooled and may be submergible in liquid. The wires at least partially composing the strainer 34 will be discussed in further detail in Figure 3.

Continuing with Figure 2, the assembly 32 also includes an electrical connector 38 that is electrically connected to the strainer through at least one wire 40. The wire 40 transmits electricity from the connector 38 to the strainer 34, and the connector 38 can be connected to a vehicle's electrical distribution system to thus send an electric current to the strainer, which in turn may be resistively heated to melt frozen urea.

Additional details of the assembly 32 are shown in Figure 3. As may be seen in Figure 3, the strainer housing 34 holds a resistive mesh 50 that is at least partially composed of wires 52 which may be woven, overlapping, crisscrossing or the like. Further still, the wires 52 can be substantially in the same plane and may be interwoven with another material in the mesh 50 such as fabric or plastic to remove impurities from urea passing therethrough, although in some embodiments only electrically energizable wires, closely spaced, may be provided to undertake both the filtering and heating functions. When other materials are included in the strainer 44 in addition to energizable wires 52, the other materials can not only provide structural support for the strainer, but also help strain urea going into a urea tank. Thus, the mesh 50 including wires 52 and other materials may form a disc with openings in it for urea to be strained through.

Further still, the wires 52 may be excited by electricity from the connector 38 to warm urea. Thus, in its heated state, the strainer melts frozen urea at the point where the urea is filtered. Further, an external temperature sensor located on a vehicle in a non-limiting embodiment may be used to determine when current should be sent from the power source to the mesh 50 to melt frozen urea.

Moreover, the maximum temperature to which the strainer may be heated may vary depending on the materials composing both the mesh 50 the strainer so as to not damage either the strainer mesh 50. Regardless, the position of the strainer relative to a urea tank optimizes energy conservation by reducing the electrical draw required to heat frozen urea in a urea tank.

It is to be understood that the present non-limiting embodiment may be used in other applications other than the filtering of urea. The present invention may be used in conjunction with diesel filtration systems or windshield wiper filtration systems, for example.

While the particular HEATED UREA STRAINER FOR DIESEL ENGINE is herein shown and described in detail, it is to be understood that the subject matter which is encompassed by the present invention is limited only by the claims. For example, in addition to the above connection mechanisms, other quick connect/quick disconnect type of mechanisms may be used.

## Claims

1. A system comprising:
a urea tank (22); and
a strainer (24) through which urea from the tank passes to an emission control system (18) of a diesel engine (12), at least portions of the strainer (24) being heatable to heat urea passing therethrough.

2. The system of Claim 1, wherein the portions include wires (52).

3. The system of Claim 2, wherein the wires (52) criss-cross.

4. The system of Claim 1, wherein the strainer (24) is disc-shaped.

5. The system of Claim 2, wherein the wires (52) are juxtaposed with material in a mesh (50) to remove impurities from urea.

6. The system of Claim 2, comprising an electrical connector (38) configured for engaging a source of electricity, the connector being electrically connected to at least some of the wires (52).

7. Apparatus comprising:
strainer (24) engageable with a urea tank (22) associated with a diesel engine for chemically reacting with nitrogen oxide, the strainer (24) including plural elements removing impurities from urea passing therethrough, at least some elements being heatable by electricity to heat urea; and
an electrical connector (38) configured for engaging a source of electricity, the connector being electrically connected to at least some of the elements.

8. The apparatus of Claim 7, wherein the elements include wires (52).

9. The apparatus of Claim 8, wherein the wires (52) criss-cross.

10. The apparatus of Claim 7, wherein the strainer (24) is disc-shaped.

11. The apparatus of Claim 8, wherein the wires (52) are juxtaposed with material in a mesh (50) to remove impurities from urea.

12. Method comprising:
- removing impurities from urea; and
- heating urea as the impurities are being removed therefrom.

13. The method of Claim 12, comprising providing the urea to a diesel engine emission control system (18).

14. The method of Claim 12, comprising a providing a strainer (24) purifying and heating the urea.

15. The method of Claim 14, wherein at least portions of the strainer (24) are heatable to heat urea passing therethrough.
